# EUROPÄISCHE PATENTSCHRIFT

(11) **EP 1 886 865 B1**
(45) Veröffentlichungstag und Bekanntmachung des Hinweises auf die Patenterteilung: **30.09.2009**
(21) Anmeldenummer: 07013862.3
(22) Anmeldetag: 16.07.2007
(51) Int. Cl.: B60K 35/00, B60K 37/00

(54) **Multifunktionsbedienvorrichtung und Verfahren zum Betreiben einer Multifunktionsbedienvorrichtung**
Multi-functional operating device and method for actuating a multi-functional operating device
Dispositif de commande multifonctions et procédé de fonctionnement d'un dispositif de commande multifonctions

(30) Priorität: 11.08.2006 DE 102006037762
(43) Veröffentlichungstag der Anmeldung: 13.02.2008
(73) Patentinhaber: Volkswagen Aktiengesellschaft, 38436 Wolfsburg (DE)
(72) Erfinder: Medler, Andreas, 38268 Lengede (DE); Michaelis, Jan, 10711 Berlin (DE); Hauschild, Frank, 10587 Berlin (DE); Grübel, Andre, 14059 Berlin (DE)
(74) Vertreter: Patentanwälte Bressel und Partner

(56) Entgegenhaltungen:
- WO-A-03/036455
- US-A1- 2004 140 959

## Beschreibung

Die Erfindung betrifft eine Multifunktionsbedienvorrichtung in einem Kraftfahrzeug mit einer Anzeigevorrichtung mit einem Anzeigeschirm zum Wiedergeben von Informationsdaten, insbesondere Bild-und/oder Videodaten, zumindest nach Aktivierung einer Funktion und mindestens einer positionsempfindlichen Sensoreinheit sowie ein Verfahren zum Betreiben einer solchen Multifunktionsbedienvorrchtung.

Moderne Kraftfahrzeuge umfassen heutzutage Multifunktionsbedienvorrichtungen, mit denen Informationsdaten, insbesondere auch Audio- und/oder Videodaten unterschiedlicher Quellen wiedergegeben werden können Als Datenquellen dienen zum einen Speichermedien wie DVD's oder CD's als auch nicht flüchtige Speicher in Form von Memoriesticks oder Speicher karten. Auch Festplatten sind denkbar. Als weitere Datenquelle kommen drahtlos übertragene Datenströme in Betracht, die beispielsweise mittels analoger oder digitaler Übertragung, insbesondere auch Radio- oder Fernsehübertragung zu dem Kraftfahrzeug übermittelt werden. In Zukunft können weiter Datenquellen hinzukommen.

Die Multifunktionsbedienvorrichtung ist neben der Bedienung und Anzeige von Funktionen und Informationen, beispielsweise von Funktionen und Informationen einer Zielführungseinrichtung vorgesehen, um Audio- und Videodaten im Kraftfahrzeug wiederzugeben. Die Wiedergabe von Informationsdaten, beispielsweise der Straßenkarte einer Zielführungseinrichtung, und Videodaten erfolgt hierbei auf einem Anzeigeschirm einer Anzeigevorrichtung. Der Anzeigeschirm der Anzeigevorrichtung ist beispielsweise als LCD-Bildschirm, als Plasmabildschirm usw. ausgebildet. Der Anzeigeschirm kann ebenso eine Fläche sein, auf die Informations- und Videodaten projiziert werde.

Bei einer Wiedergabe der definierten Informationsdaten und/oder Videodaten ist es wünschenswert, möglichst die gesamte Fläche des Anzeigeschirms für die Wiedergabe der Daten nutzen zu können. Eine Wiedergabe in einem Modus, in dem der Bildschirm zumindest im wesentlichen vollflächig zur Wiedergabe von Daten genutzt wird, wird als Vollbildmodus bezeichnet.

Für eine Bedienung der Multifunktionsbedienvorrichtung weist diese in der Regel als Tasten oder Drehdrückknöpfe ausgebildete Betätigungselemente oder einen so genannten Tuchscreen, das heißt eine berührungssensitive Anzeigeeinrichtung, wobei durch Berührung dargestellter Bedienelemente Funktionen ausgelöst werden, auf.

Aus der DE 102 252 675 B3 ist ein Bediensystem für ein Unterhaltungs- und/oder Informationsgerät in einem Kraftfahrzeug mit einem Display für die Darstellung von Videosignalen und/oder von mittels einer Onscreendisplayschaltung generierten, seitenweise angezeigten Bedienungsauswahlmenüs bekannt, bei der jedes dargestellte Auswahlmenü eine bestimmte Anzahl von feldartig dargestellten Funktionsanzeigen aufweist, die mittels Cursor und/oder bei Darstellung auf einem als Touchscreen ausgebildeten Display durch Berührung auswählbar sind und zugeordnete Funktionssteuerungen auslösen, die in einer weiteren Bedienungsebene oder durch Betätigen von zugeordneten Tasten einstellbar sind.

Aus der gattungs bildenden US 2004/0140959 A1 ist eine Anzeigevorrichtung für ein Fahrzeug bekannt. Diese umfasst eine Transmissionsanzeigevorrichtung, die mit einer berührungsempfindlichen Positionserfassungseinheit ausgebildet ist. Die Transmissionsanzeigevorrichtung kann in einen transparenten Anzeigemodus geschaltet werden. Beabstandet hinter der Transmissionsanzeigevorrichtung ist eine Abbildungsanzeigevorrichtung angeordnet. Auf der Transmissionsanzeigevorrichtung können einzelne vorfestgelegte Bereiche in einen intransparenten Zustand versetzt werden und hierüber Bedienelemente dargestellt werden. Aufgrund des Abstandes der Transmissionsanzeigevorrichtung von der Abbildungsanzeigevorrichtung ist es jedoch möglich, an diesen Bedienelementen "vorbei zu schauen". Die Vorrichtung benötigt zwei voneinander beabstandete Anzeigevorrichtungen, von denen die erste nicht freiprogrammierbar in dem Sinne ausgebildet ist, dass hierauf an ein und derselben Stelle unterschiedliche Informationen zur Anzeige gebracht werden können.

Aus der WO 03/036455 A1 ist eine multifunktionale Schaltungsvorrichtung bekannt, die mit elektronischen Einrichtungen beispielsweise zum Anpassen von Funktionen in einem Fahrzeug verwendet wird. Eine zentrale Verarbeitungseinheit steuert die individuelle Anpassung der Einrichtungen und ein Datenbus ermöglicht einen Informationsaustausch in beiden Richtungen zwischen der zentralen Verarbeitungseinheit und den funktionalen Einrichtungen. Mit der zentralen Verarbeitungseinheit ist eine Anzeigevorrichtung direkt verknüpft, während die Schaltvorrichtung über eine geeignete Schnittstelle mit dem Datenbus verbunden ist. Um die Nutzung der Schaltungsvorrichtung zu vereinfachen, wird eine Animation der Schaltungsvorrichtung auf der Anzeigevorrichtung dargestellt

Unbefriedigend gelöst ist es bisher, eine Multifunktionsbedienvorrichtung mit einem Touchscreen intuitiv zu bedienen, während Informationsdaten, insbesondere Bild- oder Videodaten im Vollbildmodus wiedergegeben werden und auf dem Anzeigebild keine Informationen angezeigt werden, die einen Hinweis zur Bedienung der Multifunktionsbedienvorrichtung geben. Solche Informationsdaten können beispielsweise eine Kartendarstellung einer Zielführungseinrichtung oder ein Fernsehbild sein. Dies gilt insbesondere für eine kontextabhängige Bedienung, d.h. eine Bedienung, die mit der Wiedergabe der Informationsdaten in Zusammenhang steht.

Aufgabe der Erfindung ist es daher, eine multifunktionsbedienvorrichtung und ein Verfahren zur Bedienung einer Multifunktionsbedienvorrichtung mit einem Touchscreen in einem Kraftfahrzeug zu schaffen, mit denen eine intuitive Bedienung der Multifunktionsbedienvorrichtung im Fall der Darstellung der Informationsdaten im Vollbildmodus möglich ist.

Die Aufgabe wird erfindungsgemäß durch ein Verfahren mit den Merkmalen des Patentanspruchs 1 sowie eine Vorrichtung mit den Merkmalen des Patentanspruchs 8 gelöst Vorteilhafte Ausgestaltungen ergeben sich aus den Unteransprüchen.

Insbesondere wird vorgeschlagen, ein Verfahren zum Betreiben einer Multifunktionsbedienvorrichtung in einem Kraftfahrzeug mit einer Anzeigevorrichtung und mindestens einer positionsempfindlichen Sensoreinheit zu schaffen, welches den Schritt Wiedergeben von Informationsdaten, insbesondere Bild- und/oder Videodaten, zumindest nach Aktivierung einer Funktion auf der Anzeigevorrichtung umfasst, wobei die Informationsdaten in einem Vollbildmodus zumindest im wesentlichen ohne eine Darstellung von Bedienelementen auf der Anzeigevorrichtung wiedergegeben werden und/oder wiedergebbar sind und mittels der mindestens einen positionsempfindlichen Sensoreinheit eine erste Bedienhandlung erfasst wird, die ein Annähern einer Bedieneinrichtung, insbesondere eines Körperteils eines Nutzers an die Anzeigevorrichtung und/oder ein Berühren der Anzeigevorrichtung mit der Bedieneinrichtung, insbesondere dem Körperteil, jeweils an einer Position umfasst, an der die Informationsdaten wiedergegeben werden, wobei als Folge der erfassten ersten Bedienhandlung auf dem Anzeigeschirm Bedien- und/oder Informationselemente eingeblendet werden. Um aus dem Bedienmodus, bei dem die Bedien- und/oder Informationselemente eingeblendet sind, in den Vollbildmodus zurückzugelangen, ist vorgesehen, dass eine zweite Bedienhandlung erfasst wird, die ein erneutes Annähem der Bedieneinrichtung, beispielsweise eines Körperteils des Nutzers, an das Anzeigebild und/oder ein Berühren des Anzeigebildes mit der Bedieneinrichtung umfasst, wobei die Annäherung an den Anzeigeschirm oder das Berühren des Anzeigeschirms jeweils an einer Position erfolgt, an der Informationsdaten wiedergegeben werden, und als Folge der zweiten Bedienhandlung eine vollflächige Wiedergabe ohne eine Anzeige der Bedien- und/oder Informationselemente fortgesetzt wird. Durch die erfindungsgemäße Lösung wird erreicht, dass zur Wiedergabe die gesamte Fläche der Anzeigevorrichtung genutzt werden kann und dennoch jederzeit eine Bedienung durch den Benutzer eingeleitet werden kann. Es werden keine individuellen Betätigungselemente zusätzlich zu der mindestens einen positionsempfindlichen Sensoreinheit benötigt. Hierdurch können zusätzliche Betätlgungselemente im Kraftfahrzeug eingespart werden bzw. eine Mehrfachbelegung der vorhandenen Betätigungselemente verringert werden oder vermieden werden. Bei der positionsempfindlichen Sensoreinheit kann es sich um die Sensoreinheit einer als Touchscreen ausgebildeten Anzeigevorrichtung handeln. Alternativ kann es sich beispielsweise um eine Einheit handeln, die über den Körper des Nutzers übertragene Hochfrequenzsignale erfasst. Vorrichtungen, die diese Eigenschaft ausnutzen, um eine Position eines menschlichen Körperteils in einem Kraftfahrzeug zu erfassen, sind beispielsweise in WO 2004/078536 beschrieben. Die positionsempfindliche Sensoreinheit kann aber auch nach einem Ultraschallverfahren oder einem optischen Verfahren arbeiten. Eine nach einem optischen Verfahren arbeitende Sensoreinheit kann beispielsweise folgendermaßen ausgestaltet sein. Eine Sende-LED strahlt ein rechteckförmig amplitudenmoduliertes Signal im optischen oder infraroten Wellenlängenbereich ab. Das an einem Objekt, beispielsweise einem Körperteil, reflektierte Lichtsignal wird von einer Fotodiode erfasst. Von einer Kompensations-LED wird ein um 180° phasenversetztes, ebenfalls rechteckförmiges amplitudenmoduliertes Referenzlichtsignal zu der Fotodiode über einen unveränderlichen Lichtweg gesandt. Die Kompensations-LED wird über einen Regelkreis mittels eines Regelsignals so ausgeregelt, dass sich das empfangene reflektierte Lichtsignal der Sende-LED und das empfange Referenzlichtsignal der Kompensations-LED an der Fotodiode aufheben und ein Gleichsignal detektiert wird. Eine Änderung des Regelsignals ist ein Maß für den Abstand des Objekts. Eine nach diesem Prinzip ausgestaltete Sensoreinheit ist weitgehend unabhängig von Temperatur und Helligkeitsschwankungen. Mehrerer solcher Sensoreinheiten können genutzt werden, um eine Position eines Körperteils vor einer Anzeigevorrichtung zu ermitteln. Hierdurch ist auch eine berührungslose Betätigung von auf der Anzeigevorrichtung dargestellten Bedienelementen möglich bzw. ein Detektieren einer Bedienhandlung, die in einem Annähern und/oder einem Berühren des Anzeigeschirms ausgeführt wird, detektierbar.

Wenn Informationsdaten im Vollbildmodus zumindest im wesentlichen vollflächig im Kraftfahrzeug über die Multifunktionsbedienvorrichtung wiedergegeben werden, wird es von den Nutzern bevorzugt, dass die Bedien- und/oder Informationselemente den Informationsdaten überlagert eingeblendet werden. Dies bedeutet, dass die Informationsdaten im Hintergrund oder in einem nicht durch die Bedienelemente beanspruchten Bereich der Anzeigevorrichtung weiter wiedergegeben werden.

Eine besonders vorteilhafte Ausführungsform der Erfindung sieht vor, dass die Bedien- und/oder Informationselemente eine Transparenz aufweisend eingeblendet werden. Dies hat den Vorteil, dass die Informationsdaten, die in einem Bereich dargestellt werden, in dem die Bedien- und/oder Informationselemente überlagernd eingeblendet sind, ebenfalls wahrgenommen werden können. Wird beispielsweise eine Informationssendung übertragen, bei der bestimmte Informationen in dem Videosignal als Text- und/oder Zahleneinblendung enthalten sind, so können diese Texteinblendungen oder Zahleneinblendungen auch gelesen werden, während die Bedien- und/oder Informationselemente der Multifunktionsbedienvorrichtung eingeblendet sind. Hierdurch wird also erreicht, dass kein Informationsverlust bei der Aufnahme durch den Nutzer der wiedergegebenen Informationsdaten eintritt, während dieser eine Bedienhandlung der Multifunktionsbedienvorrichtung vornehmen will.

Um eine intuitive Bedienung der Multifunktionsbedienvorrichtung zu gewährleisten ist vorgesehen, dass mit den Bedien- und/oder Informationselementen auslösbare Funktionen/Aktionen und/oder darstellbare Informationen verknüpft sind, wobei die auslösbaren Funktionen/Aktionen und/oder die darstellbaren Informationen kontextbezogen zu den wiedergegebenen Informationsdaten sind. Hierdurch wird eine einfache und übersichtliche Bedienung der Multifunktionsbedienvorrichtung erreicht. Es ist jedoch auch denkbar, dass Bedienelemente, die mit den wiedergegebenen Informationsdaten nicht in Zusammenhang stehen, beispielsweise Bediemelemente eines Hauptmenüs, eingeblendet werden.

Bei einer bevorzugten Ausführungsform umfassen die auslösbaren Funktionen/Aktionen ein Unterbrechen der Wiedergabe (Pause) und/oder ein Abbrechen der Wiedergabe (Stopp) und/oder ein schnelles Wiedergeben und/oder ein verlangsamtes Wiedergeben und/oder ein Vorwärtsspringen und/oder ein Rückwärtsspringen.

Die verknüpften Informationen umfassen vorzugsweise eine Restwiedergabedauer und/oder eine bereits erfolgte Wiedergabedauer und/oder eine Gesamtwiedergabedauer und/oder einen Titel und/oder eine Titelzahl und/oder eine Gesamttitelzahl und/oder eine Kapitelinformation.

Ebenso kann es vorteilhaft sein, dass nach einer vorgegebenen Zeitdauer, in der keine Bedienhandlung erfolgt ist, in den Vollbildmoduszurückgewechselt wird. Daher sieht eine besonders bevorzugte Ausführungsform der Erfindung vor, dass mit dem Erfassen einer jeden Bedienhandlung, die ein Annähern der Bedieneinrichtung, beispielsweise eines Körperteils eines Nutzers, an das Anzeigebild und/oder ein Berühren des Anzeigebildes mit der Bedieneinrichtung umfasst, eine Zeitmessung neu gestartet wird und eine anhand der Zeitmessung ermittelte verstrichene Zeit mit einer vorgegebenen Zeitdauer verglichen wird und eine vollflächige Wiedergabe ohne eine Anzeige der Bedien- und/oder Informationselemente fortgesetzt wird, wenn der Vergleich ergibt, dass die verstrichene Zeit größer als die vorgegebene Zeitdauer ist.

Die Merkmale der erfindungsgemäßen Multifunktionsbedienvorrichtung weisen dieselben Vorteile wie die Merkmale des erfindungsgemäßen Verfahrens zum Bedienen der Multifunktionsbedienvorrichtung auf.

Nachfolgend wird die Erfindung anhand eines bevorzugten Ausführungsbeispiels näher erläutert. Hierbei zeigt:
- Fig. 1: einen Anzeigeschirm der Multifunktionsbedienvorrichtung bei einer Wiedergabe von Informationsdaten, hier Videodaten, im Vollbildmodus; und
- Fig. 2: eine Ansicht des Anzeigeschirms in einem Bedienmodus, in dem Bedien- und/oder Informationselemente überlagernd über die Videoinformationen eingeblendet sind.

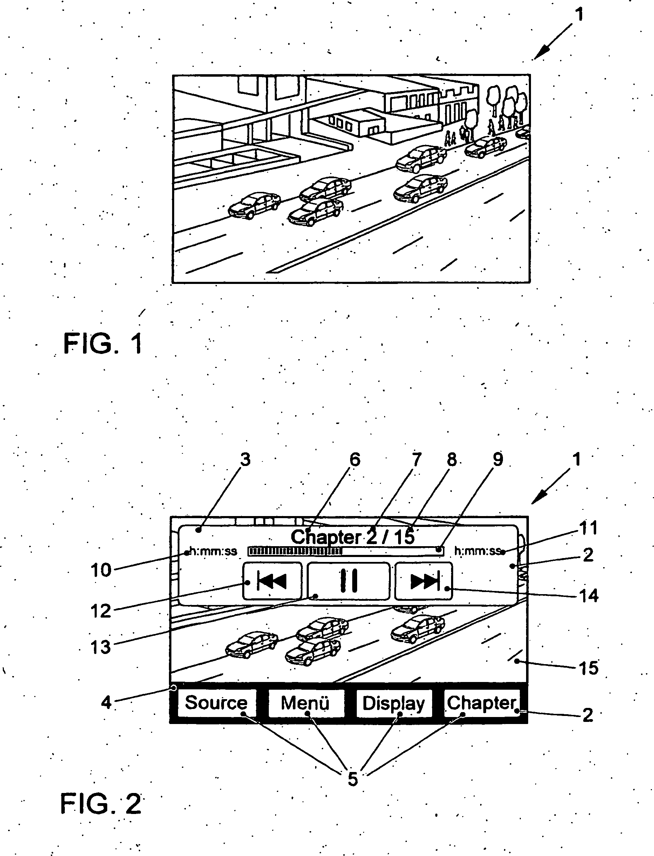

In Fig. 1 ist ein Anzeigeschirm 1 einer Multifunktionsbedienvorrichtung In einem Kraftfahrzeug dargestellt. Der Anzeigeschirm 1 ist beispielsweise in einer Mittelkonsole eines Kraftfahrzeugs angeordnet. Auf dem Anzeigeschirm 1 werden Videodaten wiedergegeben, die hier beispielhaft auf einer Straße fahrende Kraftfahrzeuge darstellen. Auf dem Anzeigeschirm 1 sind keine Bedien- und/oder Informationselemente dargestellt. Der Anzeigeschirm 1 wird vollflächig zur Wiedergabe der Videodaten verwendet.

Berührt der Fahrer mit seinem Finger den Anzeigeschirm 1, der als Touchscreen ausgebildet ist, an irgend einer Stelle, so werden Bedien- und Informationselemente eingeblendet, wie dies in Fig. 2 dargestellt ist. Im dargestellt Beispiel umfassen die Bedien- und Informationselemente 2 einen in einem oberen Bereich des Anzeigeschirms 1 eingeblendeten Informations- und Bedienbalken 3 und in einem unteren Bereich des Anzeigeschirms 1 eine Menüleiste 4. Die Menüleiste 4 umfasst mehrere Bedienelemente 5, über die Untermenüs oder Funktionen, die in einem Kontext zu den.dargestellten Videodaten stehen, wiedergegeben werden. Der Informations- und Bedienbalken 3 umfasst in einem oberen Teil eine Kapitelangabe 6, die eine aktuelle Kapitelzahl 7 und eine Gesamtkapitelzahl 8 umfasst. Zusätzlich ist darunter ein Verlaufsbalken 9 eingeblendet, der eine Information über die bereits erfolgte Wiedergabedauer zur Gesamtwiedergabedauer der Videodaten angibt. In einem linken Bereich ist die bereits verstrichene Wiedergabezeit in Form von Ziffern 10 dargestellt. Eine noch verbleibende Wiedergabezeit 11 ist in einem rechten Bereich des Informations- und Bedienbalkens 3 angegeben. Zusätzlich umfasst der Informations- und Bedienbalken 3 Bedienelemente 12, 13, 14, die als Rückwärtsspruhgtaste, Pausetaste und Vorwärtssprungtaste ausgebildet sind.

Mit jeder Berührung des Anzeigeschirms 1 wird eine Zeitmessung gestartet. Diese Zeitmessung erfolgt beispielsweise, indem ein Zähler in regelmäßigen Zeitabständen automatisch inkrementiert wird. Der Zählerinhalt wird mit einem vorgegebenen Wert, der eine vorgegebene Zeitspanne repräsentiert, verglichen. Überschreitet der Zählerinhalt den vorgegebenen Wert, so wird in den Vollbildmodus zurückgewechselt. D.h., die eingeblendeten Bedien- und/oder Informationselemente werden wieder ausgeblendet. Da die Zeitmessung mit jeder Bemühung des Anzeigeschirms 1 (Betätigungshandlung) erneut gestartet wird; wird hierdurch erreicht, dass nach der vorgegebenen Zeitspanne in den Vollbildmodus zurückgewechselt wird, wenn innerhalb der vorgegebenen Zeitspanne keine Betätigungshandlung vorgenommen wurde.

In den Betätigungsmodus wird ebenfalls zurückgewechselt, wenn eine Berührung des Anzeigeschirms 1 an einer Stelle 15 ausgeführt wird, an der nach wie vor Videodaten ohne darüber eingeblendete Bedien- und/oder Informationselemente 2 dargestellt werden.

Die eingeblendeten Bedien- und/oder Informationselemente sind nur exemplarisch für beliebige Bedienelemente, die im Kontext zu den wiedergegebenen Videodaten stehen. Bei einer anderen Ausführungsform können die Bedien- und/oder Informationselemente transparent ausgestaltet sein, so dass in einem Hintergrund hinter den Bedien- und Informationselementen die wiedergegebenen Videodaten zumindest teilweise erkennbar sind

Die Multifunktionsbedienvorrichtung kann zusätzlich in Hardware ausgebildete Betätigungselemente umfassen, die in der Regel jedoch nicht kontextgebundene Funktionen oder Aktionen bei einer Betätigung auslösen. Dies bedeutet, dass diesen häufig als Tasten ausgebildeten Betätigungselementen in der Regel feste Funktionen oder Aktionen zugeordnet sind. Dies gilt insbesondere für Multifunktionsbedienvorrichtungen, die in eine Multifunktionsanzeige- und Bedienvorrichtung integriert sind.

Alternativ und/oder zusätzlich kann die Multifunktionsbedienvörrichtung auch in Hardware ausgeführte Betätigungselemente umfassen, deren Betätigung eine bei der Wiedergabe wirksame kontextbezogene Funktion auslöst. Auch bei solch einer Ausführungsform wird ein Bedienkomfort dadurch gesteigert, dass die Anzahl der Betätigungselemente in der Regel nicht ausreicht, um alle Funktionen einem der Betätigungselemehte zuzuweisen. Eine kontextbezogene Einblendung von Bedien- und/oder Informationselementen erweist sich somit auch bei solchen Ausführungsformen als vorteilhaft.

### Bezugszeichenliste

- 1: Anzeigeschirm
- 2: Bedien- und Informationselemente
- 3: Informations- und Bedienbalken
- 4: Menüteiste
- 5: Bedienelemente
- 6: Kapitelangabe
- 7: aktuelle Kapitelzahl
- 8: Gesamtkapitelzahl
- 9: Verlaufsbalken
- 10: verstrichene Wiedergabezeit
- 11: verbleibende Wiedergabezeit
- 12: Bedienelement (Rücksprung)
- 13: Bedienelement (Pause)
- 14: Bedienelement (Vorwärtssprung)
- 15: Stelle, an der Videodaten wiedergegeben werden

## Patentansprüche

1. Verfahren zum Betreiben einer Multifunktionsbedienvorrichtung in einem Kraftfahrzeug mit einer Anzeigevorrichtung mit einem Anzeigeschirm (1) und mindestens einer positionsempfindlichen Sensoreinrichtung umfassend die Schritte: Wiedergeben von Informationsdaten, insbesondere Bild- und/oder Videodaten, auf der Anzeigevorrichtung, wobei in einem Vollbildmodus die Informationsdaten, zumindest im wesentlichen ohne eine Darstellung von Bedienelementen (2, 5) auf dem Anzeigeschirm (1) wiedergegeben werden und mittels der mindestens einen positionsempfindlichen Sensoreinrichtung eine erste Bedienhandlung erfasst wird, die ein Annähern einer Bedieneinrichtung, insbesondere eines Körperteils eines Nutzers an den Anzeigeschirm (1) und/oder ein Berühren des Anzeigeschirms (1) mit der Bedieneinrichtung, insbesondere dem Körperteil, jeweils an einer Position umfasst, an der die Informationsdaten wiedergegeben werden, wobei als Folge der erfassten ersten Bedienhandlung auf dem Anzeigeschirm (1) Bedien- und/oder Informationselemente (2) eingeblendet werden,
**dadurch gekennzeichnet, dass**
eine zweite Bedienhandlung erfasst wird, die ein erneutes Annähern der Bedieneinrichtung, insbesondere eines Körperteils eines Nutzers an den Anzeigeschirm (1) und/oder ein Berühren des Anzeigeschirms (1) mit der Bedieneinrichtung, insbesondere dem Körperteil umfasst, wobei die Annäherung an den Anzeigeschirm (1) oder das Berühren des Anzeigeschirms (1) jeweils an einer Position erfolgt, an der Informationsdaten wiedergegeben werden, und als Folge der zweiten Bedienhandlung eine vollflächige Wiedergabe ohne eine Anzeige der Bedien- und/oder Informationselemente (2) fortgesetzt wird.

2. Verfahren nach Anspruch 1, **dadurch gekennzeichnet, dass** die Bedien- und/oder Informationselemente (2) den Informationsdaten überlagert eingeblendet werden.

3. Verfahren nach Anspruch 1 oder 2, **dadurch gekennzeichnet, dass** die Bedien- und/oder Informationselemente (2) eine Transparenz aufweisend eingeblendet werden.

4. Verfahren nach einem der vorangehenden Ansprüche, **dadurch gekennzeichnet, dass** mit den Bedien- und/oder Informationselementen (2) auslösbare Funktionen/Aktionen und/oder darstellbare Informationen verknüpft sind, wobei die auslösbaren Funktionen/Aktionen und/oder die darstellbaren Informationen kontextbezogen zu den wiedergegebenen Informationsdaten sind.

5. Verfahren nach einem der vorangehenden Ansprüche, **dadurch gekennzeichnet, dass** die auslösbaren Funktionen/Aktionen ein Unterbrechen der Wiedergabe (Pause) und/oder ein Abbrechen der Wiedergabe (Stopp) und/oder ein schnelles Wiedergeben und/oder ein verlangsamtes Wiedergeben und/oder ein Vorwärtsspringen und/oder ein Rückwärtsspringen umfassen.

6. Verfahren nach einem der vorangehenden Ansprüche, **dadurch gekennzeichnet, dass** die verknüpften Informationen eine Restwiedergabedauer und/oder eine Wiedergabedauer und/oder eine Gesamtwiedergabedauer und/oder einen Titel und/oder eine Titelzahl und/oder eine Gesamttitelzahl und/oder eine Kapitelinformation umfassen.

7. Verfahren nach einem der vorangehenden Ansprüche, **dadurch gekennzeichnet, dass** mit dem Erfassen einer jeden ersten Bedienhandlung, die ein Annähern der Bedieneinrichtung, insbesondere eines Körperteils eines Nutzers an den Anzeigeschirm (1) und/oder ein Berühren des Anzeigeschirms (1) mit der Bedieneinrichtung, insbesondere dem Körperteil umfasst, eine Zeitmessung neu gestartet wird und eine anhand der Zeitmessung ermittelte verstrichene Zeit mit einer vorgegebenen Zeitdauer verglichen wird und eine vollflächige Wiedergabe ohne eine Anzeige der Bedien- und/oder Informationselemente (2) fortgesetzt wird, wenn der Vergleich ergibt, dass die verstrichene Zeit größer als die vorgegebene Zeitdauer ist.

8. Multifunktionsbedienvorrichtung in einem Kraftfahrzeug mit einer Anzeigevorrichtung mit einem Anzeigeschirm (1) zum Wiedergeben von Informationsdaten, insbesondere Bild- und/oder Videodaten, zumindest nach Aktivierung einer Funktion und mindestens einer positionsempfindlichen Sensoreinrichtung, wobei die Informationsdaten in einem Vollbildmodus, zumindest im wesentlichen ohne eine Darstellung von Bedienelementen (2, 5) auf dem Anzeigeschirm wiedergebbar sind und/oder wiedergegeben werden und mittels der mindestens einen positionsempfindlichen Sensoreinheit eine erste Bedienhandlung erfassbar ist und/oder erfasst werden, die ein Annähern einer Bedieneinrichtung, insbesondere eines Körperteils eines Nutzers an den Anzeigeschirm (1) und/oder ein Berühren des Anzeigeschirms (1) mit der Bedieneinrichtung, insbesondere dem Körperteil jeweils an einer Position umfasst, an der Informationsdaten wiedergegeben werden, wobei als Folge der erfassten ersten Bedienhandlung auf dem Anzeigeschirm (1) Bedien- und/oder Informationselemente (2) einblendbar sind und/oder eingeblendet werden, **dadurch gekennzeichnet, dass**
eine zweite Bedienhandlung erfassbar ist, die ein erneutes Annähern einer Bedieneinrichtung, insbesondere eines Körperteils eines Nutzers, an den Anzeigeschirm (1) und/oder ein Berühren des Anzeigeschirms (1) mit der Bedieneinrichtung, insbesondere dem Körperteil, umfasst, wobei die Annäherung an den Anzeigeschirm (1) oder das Berühren des Anzeigeschirms (1) jeweils an einer Position erfolgt, an der Informationsdaten wiedergegeben werden, und als Folge der zweiten Bedienhandlung ein Fortsetzen der vollflächigen Wiedergabe ohne eine Anzeige der Bedien- und/oder Informationselemente (2) erfolgt.

9. Multifunktionsbedienvorrichtung nach Anspruch 8, **dadurch gekennzeichnet, dass** die Bedien- und/oder Informationselemente (2) den Informationsdaten überlagert einblendbar sind und/oder eingeblendet werden.

10. Multifunktionsbedienvorrichtung nach Anspruch 8 oder 9, **dadurch gekennzeichnet, dass** die Bedien- und/oder Informationselemente (2) eine Transparenz aufweisend einblendbar sind und/oder eingeblendet werden.

11. Multifunktionsbedienvorrichtung nach einem der Ansprüche 8 bis 10, **dadurch gekennzeichnet, dass** mit den Bedien- und/oder Informationselementen (2) auslösbare Funktionen/Aktionen und/oder darstellbare Informationen verknüpft sind, wobei die auslösbaren Funktionen/Aktionen und/oder die darstellbaren Informationen kontextbezogen zu den wiedergegebenen Informationsdaten sind.

12. Multifunktionsbedienvorrichtung nach einem der Ansprüche 8 bis 11, **dadurch gekennzeichnet, dass** die auslösbaren Funktionen/Aktionen ein Unterbrechen der Wiedergabe (Pause) und/oder ein Abbrechen der Wiedergabe (Stopp) und/oder ein schnelles Wiedergeben und/oder ein verlangsamtes Wiedergeben und/oder ein Vorwärtsspringen und/oder ein Rückwärtsspringen umfassen.

13. Multifunktionsbedienvorrichtung nach einem der Ansprüche 8 bis 12, **dadurch gekennzeichnet, dass** die verknüpften Informationen eine Restwiedergabedauer und/oder eine Wiedergabedauer und/oder eine Gesamtwiedergabedauer und/oder einen Titel und/oder eine Titelzahl und/oder eine Gesamttitelzahl und/oder eine Kapitelinformation umfassen.

14. Multifunktionsbedienvorrichtung nach einem der Ansprüche 8 bis 13, **gekennzeichnet durch** eine Zeitermittlungseinheit, bei der bei dem Erfassen einer jeden ersten Bedienhandlung, die ein Annähern einer Bedieneinrichtung, insbesondere eines Körperteils eines Nutzers, an den Anzeigeschirm (1) und/oder ein Berühren des Anzeigeschirms (1) mit der Bedieneinrichtung, insbesondere dem Körperteil umfasst, eine Zeitmessung neu gestartet wird, und eine Steuereinheit, mit der eine anhand der Zeitmessung ermittelte verstrichene Zeit mit einer vorgegebenen Zeitdauer verglichen wird und **durch** die eine Fortsetzung der vollflächigen Wiedergabe ohne eine Anzeige der Bedien- und/oder informationselemente (2) veranlasst wird, wenn der Vergleich ergibt, dass die verstrichene Zeit größer als die vorgegebene Zeitdauer ist.

## Claims

1. Method for actuating a multi-functional operating device in a motor vehicle having a display device with a display screen (1) and at least one position-sensitive sensor device, comprising the steps:
representation of information data, in particular image data and/or video data, on the display device, wherein in a frame mode the information data is reproduced at least essentially without representation of operating elements (2, 5) on the display screen (1), and a first operating action is sensed by means of the at least one position-sensitive sensor device, which action comprises an operating device, in particular a body part of a user, being moved closer to the display screen (1) and/or the display screen (1) being touched with the operating device, in particular the body part, in each case at a position at which the information data are reproduced, wherein as a consequence of the sensed first operating action operating elements (2) and/or information elements (2) are included on the display screen (1), **characterized in that**
a second operating action, which comprises the operating device, in particular a body part of a user, being moved closer to the display screen (1) and/or the display screen (1) being touched with the operating device, in particular the body part, is sensed, wherein the moving closer to the display screen (1) or the touching of the display screen (1) occurs in each case at a position at which information data are reproduced, and, as a consequence of the second operating action, reproduction over the entire surface is continued without the operating elements (2) and/or information elements (2) being displayed.

2. Method according to Claim 1, **characterized in that** the operating elements (2) and/or information elements (2) are included on the display in such a way that they are superimposed on the information data.

3. Method according to Claim 1 or 2, **characterized in that** the operating elements (2) and/or information elements (2) are included on the display in a transparent fashion.

4. Method according to one of the preceding claims, **characterized in that** functions/actions which can be triggered with the operating elements (2) and/or information elements (2) and/or information which can be represented are logically combined, wherein the functions/actions which can be triggered and/or the information which can be represented are context-related with respect to the reproduced information data.

5. Method according to one of the preceding claims, **characterized in that** the functions/actions which can be triggered comprise interrupting the reproduction (pause) and/or aborting the reproduction (stop) and/or rapid reproduction and/or slowed-down reproduction and/or jumping forward and/or jumping back.

6. Method according to one of the preceding claims, **characterized in that** the logically combined information comprises a remaining reproduction period and/or a reproduction period and/or a total reproduction period and/or a title and/or a title number and/or a total title number and/or chapter information.

7. Method according to one of the preceding claims, **characterized in that** when each first operating action, which comprises the operating device, in particular a body part of a user, being moved closer to the display screen (1) and/or the display screen (1) being touched with the operating device, in particular the body part, is sensed, a time measurement is restarted and an elapsed time, determined by means of the time measurement, is compared with a predefined time period and reproduction over the entire surface without the operating elements (2) and/or information elements (2) being displayed is continued if the comparison reveals that the elapsed time is longer than the predefined time period.

8. Multi-functional operating device in a motor vehicle having a display device with a display screen (1) for reproducing information data, in particular image data and/or video data, at least after a function and at least one position-sensitive sensor device have been activated, wherein the information data can be and/or are reproduced in a frame mode, at least essentially without operating elements (2, 5) being represented on the display screen, and a first operating action can be and/or is sensed by means of the at least one position-sensitive sensor unit, which operating action comprises an operating device, in particular a body part of a user, being moved closer to the display screen (1) and/or the display screen (1) being touched with the operating device, in particular the body part, in each case at a position at which information data are reproduced, wherein, as a consequence of the sensed first operating action, operating elements (2) and/or information elements (2) can be and/or are included on the display on the display screen (1), **characterized in that** a second operating action, which comprises an operating device, in particular a body part of a user, being again moved closer to the display screen (1) and/or the display screen (1) being touched with the operating device, in particular the body part, can be sensed, wherein the moving closer to the display screen (1) or the touching of the display screen (1) occurs in each case at a position at which information data are reproduced, and, as a consequence of the second operating action, the reproduction over the entire surface is continued without the operating elements (2) and/or information elements (2) being displayed.

9. Multi-functional operating device according to Claim 8, **characterized in that** the operating elements (2) and/or information elements (2) can be and/or are included on the display in such a way that they are superimposed on the information data.

10. Multi-functional operating device according to Claim 8 or 9, **characterized in that** the operating elements (2) and/or information elements (2) can be and/or are included on the display in a transparent fashion.

11. Multi-functional operating device according to one of Claims 8 to 10, **characterized in that** functions/actions which can be triggered with the operating elements (2) and/or information elements (2) and/or information which can be represented are logically combined, wherein the functions/actions which can be triggered and/or the information which can be represented are context-related with respect to the reproduced information data.

12. Multi-functional operating device according to one of Claims 8 to 11, **characterized in that** the functions/actions which can be triggered comprise interrupting the reproduction (pause) and/or aborting the reproduction (stop) and/or rapid reproduction and/or slowed-down reproduction and/or jumping forward and/or jumping back.

13. Multi-functional operating device according to one of Claims 8 to 12, **characterized in that** the logically combined information comprises a remaining reproduction period and/or a reproduction period and/or a total reproduction period and/or a title and/or a title number and/or a total title number and/or chapter information.

14. Multi-functional operating device according to one of Claims 8 to 13, **characterized by** a timing unit in which, when each first operating action, which comprises an operating device, in particular a body part of a user, being moved closer to the display screen (1) and/or the display screen (1) being touched with the operating device, in particular the body part, is sensed, a time measurement is restarted, and a control unit with which an elapsed time, determined by means of the time measurement, is compared with a predefined time period and which causes the reproduction over the entire surface without the operating elements (2) and/or information elements (2) being displayed to be continued if the comparison reveals that the elapsed time is longer than the predefined time period.

## Revendications

1. Procédé d'exploitation d'un dispositif de commande multifonction dans un véhicule automobile comprenant un dispositif d'affichage avec un écran d'affichage (1) et au moins un dispositif de détection sensible à la position, lequel comprend les étapes suivantes :
Reproduction de données d'information, notamment de données d'image et/ou vidéo sur le dispositif d'affichage, les données d'information étant reproduites dans un mode plein écran sur l'écran d'affichage (1), au moins pour l'essentiel sans représentation d'éléments de commande (2, 5), et une première manipulation de commande étant détectée au moyen de l'au moins un dispositif de détection sensible à la position, laquelle comprend l'approche d'un objet de commande, notamment d'une partie du corps d'un utilisateur de l'écran d'affichage (1) et/ou un contact de l'écran d'affichage (1) avec l'objet de commande, notamment la partie du corps, respectivement à une position donnée à laquelle sont reproduites les données d'information, la conséquence de la détection d'une première manipulation de commande étant l'affichage par incrustation d'éléments de commande et/ou d'information (2) sur l'écran d'affichage (1), **caractérisé en ce que** une deuxième manipulation de commande est détectée, laquelle comprend une nouvelle approche de l'objet de commande, notamment d'une partie du corps d'un utilisateur de l'écran d'affichage (1) et/ou un contact de l'écran d'affichage (1) avec l'objet de commande, notamment la partie du corps, l'approche de l'écran d'affichage (1) ou le contact avec l'écran d'affichage (1) s'effectuant respectivement à une position donnée à laquelle sont reproduites des données d'information, la conséquence de la deuxième manipulation de commande étant la poursuite d'une reproduction plein écran sans affichage les éléments de commande et/ou d'information (2).

2. Procédé selon la revendication 1, **caractérisé en ce que** les éléments de commande et/ou d'information (2) sont affichés par incrustation au-dessus les données d'information.

3. Procédé selon la revendication 1 ou 2, **caractérisé en ce que** les éléments de commande et/ou d'information (2) sont affichés par incrustation en présentant une transparence.

4. Procédé selon l'une des revendications précédentes, **caractérisé en ce qu'**aux éléments de commande et/ou d'information (2) sont liées des fonctions/actions pouvant être déclenchées et/ou des informations pouvant être représentées, les fonctions/actions pouvant être déclenchées et/ou les informations pouvant être représentées étant contextuelles par rapport aux données d'information reproduites.

5. Procédé selon l'une des revendications précédentes, **caractérisé en ce que** les fonctions/actions pouvant être déclenchées comprennent une interruption de la reproduction (pause) et/ou un arrêt de la reproduction (stop) et/ou une reproduction rapide et/ou une reproduction ralentie et/ou un saut en avant et/ou un saut en arrière.

6. Procédé selon l'une des revendications précédentes, **caractérisé en ce que** les informations liées comprennent une durée de reproduction restante et/ou une durée de reproduction et/ou une durée de reproduction totale et/ou un titre et/ou un numéro de titre et/ou un nombre total de morceaux et/ou une information de chapitre.

7. Procédé selon l'une des revendications précédentes, **caractérisé en ce que** la détection en tout cas d'une première manipulation de commande, laquelle comprend l'approche de l'objet de commande, notamment d'une partie du corps d'un utilisateur de l'écran d'affichage (1) et/ou un contact de l'écran d'affichage (1) avec l'objet de commande, notamment la partie du corps, redémarre une mesure du temps et un temps écoulé déterminé au moyen de la mesure du temps est comparé avec une durée prédéfinie et une reproduction plein écran sans affichage des éléments de commande et/ou d'information (2) est poursuivie si la comparaison a pour résultat que le temps écoulé est supérieur à la durée prédéfinie.

8. Dispositif de commande multifonction dans un véhicule automobile comprenant un dispositif d'affichage avec un écran d'affichage (1) pour la reproduction de données d'information, notamment de données d'image et/ou vidéo, au moins après l'activation d'une fonction, et comprenant au moins un dispositif de détection sensible à la position, les données d'information pouvant être reproduites et/ou étant reproduites dans un mode plein écran, au moins pour l'essentiel sans représentation d'éléments de commande (2, 5) sur l'écran d'affichage, et une première manipulation de commande pouvant être détectée et/ou étant détectée au moyen de l'au moins un dispositif de détection sensible à la position, laquelle comprend une approche d'un objet de commande, notamment d'une partie du corps d'un utilisateur de l'écran d'affichage (1) et/ou un contact de l'écran d'affichage (1) avec l'objet de commande, notamment la partie du corps, respectivement à une position donnée à laquelle sont reproduites des données d'information, la conséquence de la détection de la première manipulation de commande étant la possibilité d'affichage et/ou l'affichage par incrustation d'éléments de commande et/ou d'information (2) sur l'écran d'affichage (1),
**caractérisé en ce que**
une deuxième manipulation de commande peut être détectée, laquelle comprend une nouvelle approche de l'objet de commande, notamment d'une partie du corps d'un utilisateur de l'écran d'affichage (1) et/ou un contact de l'écran d'affichage (1) avec l'objet de commande, notamment la partie du corps, l'approche de l'écran d'affichage (1) ou le contact avec l'écran d'affichage (1) s'effectuant respectivement à une position donnée à laquelle sont reproduites des données d'information, et la conséquence de la deuxième manipulation de commande étant une poursuite de la reproduction plein écran sans affichage les éléments de commande et/ou d'information (2).

9. Dispositif de commande multifonction selon la revendication 8, **caractérisé en ce que** les éléments de commande et/ou d'information (2) peuvent être affichés et/ou sont affichés par incrustation au-dessus les données d'information.

10. Dispositif de commande multifonction selon la revendication 8 ou 9, **caractérisé en ce que** les éléments de commande et/ou d'information (2) peuvent être affichés et/ou sont affichés par incrustation en présentant une transparence.

11. Dispositif de commande multifonction selon l'une des revendications 8 à 10, **caractérisé en ce qu'**aux éléments de commande et/ou d'information (2) sont liées des fonctions/actions pouvant être déclenchées et/ou des informations pouvant être représentées, les fonctions/actions pouvant être déclenchées et/ou les informations pouvant être représentées étant contextuelles par rapport aux données d'information reproduites.

12. Dispositif de commande multifonction selon l'une des revendications 8 à 11, **caractérisé en ce que** les fonctions/actions pouvant être déclenchées comprennent une interruption de la reproduction (pause) et/ou un arrêt de la reproduction (stop) et/ou une reproduction rapide et/ou une reproduction ralentie et/ou un saut en avant et/ou un saut en arrière.

13. Dispositif de commande multifonction selon l'une des revendications 8 à 12, **caractérisé en ce que** les informations liées comprennent une durée de reproduction restante et/ou une durée de reproduction et/ou une durée de reproduction totale et/ou un titre et/ou un numéro de titre et/ou un nombre total de morceaux et/ou une information de chapitre.

14. Dispositif de commande multifonction selon l'une des revendications 8 à 13, **caractérisé par** une unité de détermination du temps qui, lors de la détection en tout cas d'une première manipulation de commande, laquelle comprend l'approche d'un objet de commande, notamment d'une partie du corps d'un utilisateur de l'écran d'affichage (1) et/ou un contact de l'écran d'affichage (1) avec l'objet de commande, notamment la partie du corps, redémarre une mesure du temps, et une unité de commande avec laquelle le temps écoulé déterminé au moyen de la mesure du temps est comparé avec une durée prédéfinie et par laquelle une poursuite de la reproduction plein écran sans affichage des éléments de commande et/ou d'information (2) est ordonnée si la comparaison a pour résultat que le temps écoulé est supérieur à la durée prédéfinie.
